# EUROPEAN PATENT SPECIFICATION

(11) **EP 2 622 717 B1**
(45) Date of publication and mention of the grant of the patent: **08.02.2017**
(21) Application number: 11853215.9
(22) Date of filing: 19.12.2011
(51) Int. Cl.: H02K 3/50, H02K 3/32, F04B 17/04, H02K 1/16, F04B 35/04, H02K 3/02

(54) **MOTOR FOR COMPRESSOR AND COMPRESSOR HAVING THE SAME**
MOTOR FÜR EINEN VERDICHTER UND VERDICHTER DAMIT
MOTEUR POUR COMPRESSEUR ET COMPRESSEUR PRÉSENTANT CELUI-CI

(30) Priority: 29.12.2010 KR 20100138203
(43) Date of publication of application: 07.08.2013
(73) Proprietor: LG Electronics Inc., Yeongdeungpo-gu Seoul 150-721 (KR)
(72) Inventor: KIM, Bisup, Gyeongsangnam-Do 641-315 (KR)
(74) Representative: Vossius & Partner Patentanwälte Rechtsanwälte mbB
(86) International application number: PCT/KR2011/009798
(87) International publication number: WO 2012/091339

(56) References cited:
- WO-A2-2008/066216
- WO-A2-2009/066875
- KR-A- 20090 065 935
- KR-A- 20090 083 153
- KR-A- 20100 084 750
- US-A1- 2007 090 714
- US-A1- 2007 262 667
- US-A1- 2008 012 438
- US-A1- 2008 170 952

## Description

### Technical Field

The present disclosure relates to a motor for a compressor employing an aluminum coil.

### Background Art

In general, small home alliances, such as a refrigerator, an air conditioner and the like, employ a compressor for compression of a refrigerant. An induction motor is widely known as a motor for the compressor, namely, a driving source of the compressor. The induction motor includes a stator on which a coil is wound, a rotor having a conductor in form of a squirrel case and rotatably inserted into the stator, and a rotation shaft pressed into the center of the rotor to transfer, to a compression unit of the compressor, a rotational force, which is generated by interaction between a rotating magnetic field by an alternating current (AC) flowing on the coil of the stator and an induced current generated in the rotor.

Each of the stator and the rotor may be formed by laminating several sheets of cores and welding them. The core includes a yoke portion formed in an approximately annular shape to define a flow path of a magnetic flux, a plurality of tooth portions protruding from an inner circumferential surface of the yoke portion by predetermined intervals from one another and having the coil wound thereon, and slot portions recessed between the adjacent tooth portions in a cutting manner.

For the coil, copper (Cu) with high conductivity and relatively low price is widely used. For reference, Argentums (Ag) is a metal exhibiting the highest conductivity but is expensive, so it is not used for the coil for the compressor motor, which is applied to the home electric devices. However, since the copper is not largely cheap, an aluminum exhibiting high conductivity as compared to its price is being used in recent time. Here, the aluminum is used for both main coil and sub coil forming a winding coil or for one of the main coil and the sub coil.

Here, a coil (magnetic wire) drawn out of each of the main coil and the sub coil is coated with an insulation layer. Hence, to make a current flow, the insulation layer should be removed or a connector terminal should penetrate into the insulation layer to directly contact the copper. However, the removing method for the insulation layer requires complicated processes and high investment, and is uneasy to ensure quality. Therefore, a pressing method, in which a serration shape is formed at a connector terminal, such that the serration penetrates into the insulation layer upon pressing the connector terminal, so as to directly contact the copper to allow for a current flow, has been widely used.

Prior art document WO 2009/066875 A2 (LG ELECTRONICS, 28 May 2009) discloses a winding coil to terminal connection where the aluminium winding coil 243 is welded to the terminal copper wire 271 after having been stripped of its coating , and with the connection portion w.

### Disclosure of Invention

### Technical Problem

The pressing method using the serration may be useful for a material, such as copper, having a high tensile strength. However, when a material, such as aluminum, having a low tensile strength is pressed onto the terminal, a cut-off defect has been caused due to a low tensile strength at the pressed portion. That is, a tensile force of the copper coil is 24.2kgf·cm whereas a tensile force of the aluminum coil is merely 11.42kgf·cm. Accordingly, upon use of the terminal having the serration, the cut-off defect may be frequently caused.

### Solution to Problem

Therefore, to obviate those problems, an aspect of the detailed description is to provide a motor for a compressor capable of preventing an aluminum coil from being cut off even if the aluminum coil is connected to a terminal by a pressing method, and a compressor having the same.

To achieve these and other advantages and in accordance with the purpose of the present invention, as embodied and broadly described herein, there is provided a motor for a compressor according to the claims.

### Advantageous Effects of Invention

As the driving motor having the aluminum coil is employed, a fabricating cost of the driving motor can be reduced that much, accordingly, a production cost of the reciprocal compressor can be remarkably reduced without great change in the efficiency thereof, as compared with the copper coil wound. The efficiency of the reciprocal compressor as compared with the price of the compressor can be enhanced by virtue of an appropriate design of the individual cross section, the entire cross section or the number of the main slot portions and the sub slot portions.

When the main coil or the sub coil of the winding coil of the driving motor is formed of aluminum with a low tensile strength and the winding coil is pressed onto terminals having serrations for connection, the reinforcing wires with a relatively great tensile strength, such as copper, can be pressed onto the terminals together with the aluminum, thereby preventing in advance the aluminum coil from being cut off, resulting in enhancement of assembly reliability of the reciprocal compressor.

### Brief Description of Drawings

FIG. 1 is a disassembled perspective view of a motor for a compressor in accordance with this specification;
FIG. 2 is a planar view of the motor for the compressor shown in FIG. 1;
FIG. 3 is a perspective view showing a stator of the motor for the compressor shown in FIG. 1;
FIG. 4 is a planar view showing the stator of the motor for the compressor shown in FIG. 1;
FIG. 5 is a planar view showing a connected state between an aluminum coil and a lead wire in the motor for the compressor shown in FIG. 1;
FIGS. 6 and 7 are a planar view and a front view schematically showing one exemplary embodiment for connecting a terminal to a sub coil made of aluminum according to FIG. 5; and
FIG. 8 is a longitudinal sectional view showing a reciprocal compressor having the motor for the compressor shown in FIG. 1.

### Best Mode for Carrying out the Invention

Embodiments of the present invention will be described below in detail with reference to the accompanying drawings where those components are rendered the same reference number that are the same or are in correspondence, regardless of the figure number, and redundant explanations are omitted. In describing the present invention, if a detailed explanation for a related known function or construction is considered to unnecessarily divert the gist of the present invention, such explanation has been omitted but would be understood by those skilled in the art. The accompanying drawings are used to help easily understood the technical idea of the present invention and it should be understood that the idea of the present invention is not limited by the accompanying drawings. The idea of the present invention should be construed to extend to any alterations, equivalents and substitutes besides the accompanying drawings.

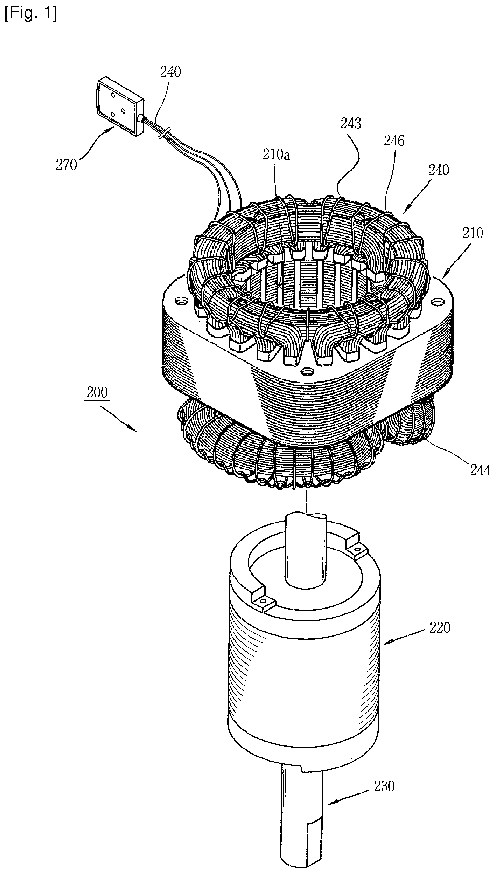

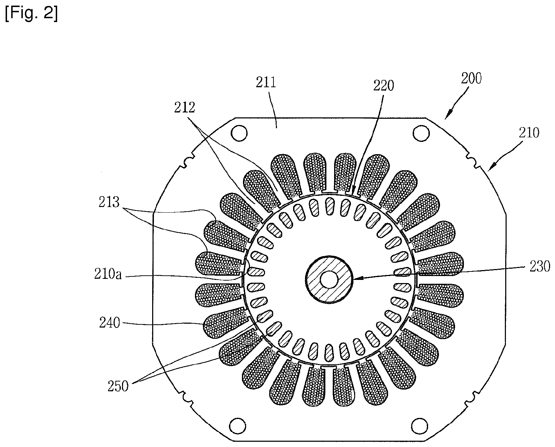

A motor 200 for a compressor according to the present disclosure, as shown in FIGS. 1 and 2, may include a stator 210 secured with a hermetic container of the compressor and having a coil 240 wound thereon, a rotor 220 rotatably inserted into the stator 210 and having conductors 250 therein, and a rotation shaft 230 press-fitted into the center of the rotor 220 to transfer a rotational force to a compression unit of the compressor.

The stator 210 may be implemented by laminating several sheets of cores by a predetermined height in an axial direction and welding them. The core may be provided with a rotor insertion hole 210a having an outer circumferential surface in an approximately rectangular shape (in some cases, similar to a circular shape) and an inner circumferential surface in form of an approximately circular shape.

The core may be provided with a yoke portion 211 connected to an outer periphery thereof in an approximately circumferential direction so as to define a flow path of a magnetic flux. The yoke portion 211 may be integrally formed, but formed in an arcuate shape according to a sheet metal work of the core, so as to be coupled together by an uneven coupling or welding. The yoke portion 211 may greatly affect efficiency of the motor. An entire available area of the yoke portion 211 may be appropriately decided depending on an inner diameter of the stator 210 and an entire area of a slot portion 213 to be explained later.

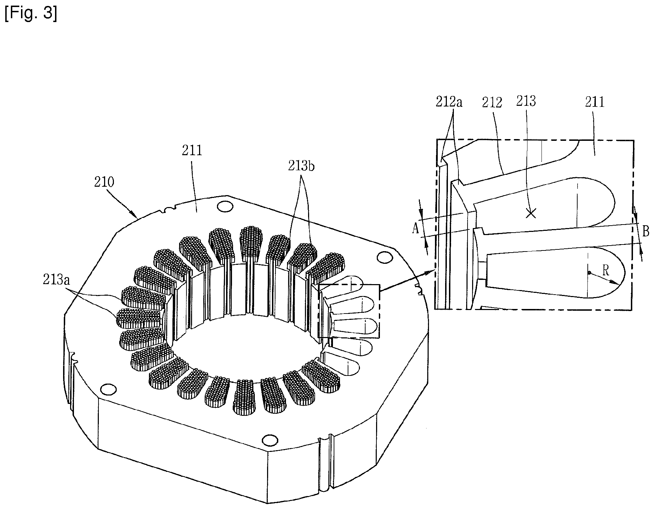

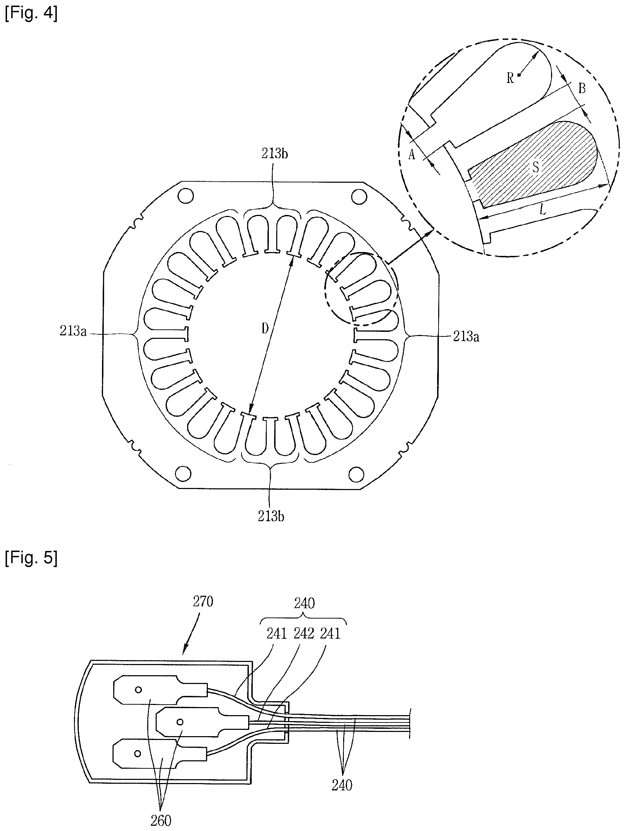

The core, as shown in FIGS. 3 and 4, may be provided with a plurality of tooth portions 212 located at a central portion thereof and protruding from an inner circumferential surface of the yoke portion 211 in a radial direction by predetermined intervals and having the coil wound thereon. The tooth portions 212 may be formed in a circumferential direction by approximately uniform intervals with interposing slot portions 213 therebetween, which will be explained later. The tooth portions 212 may have approximately the same width length B in a lengthwise direction, and the width length B of each of the tooth portions 212, although depending on a capacity of the motor, may not be longer than approximately a length L of each tooth portion 212 in an radial direction. Outer sides of the tooth portions 212 may be connected to the neighboring tooth portions 212 to be curved with each other by a predetermined curvature R.

A ratio of the width length B of each of the tooth portions 212 to the curvature R between the tooth portions 212, namely, a curvature R of a slot portion 213, which will be explained later, may be involved to the efficiency of the motor for the compressor. That is, the motor 200 for the compressor may have an increased efficiency when the ratio (B/R) of the width length B of the tooth portion 212 to the curvature R of the slot portion 213 is lower. The range of the ratio (B/R) may preferably approximately higher than 1.05 and lower than 1.15.

A ratio (D/B) of an inner diameter D of the stator 210 to the width length B of the tooth portion 212 may also be involved to the efficiency of the motor for the compressor. That is, the motor 200 for the compressor may obtain an increased efficiency when the ratio (D/B) of the inner diameter D of the stator 210 to the width length B of the tooth portion 212 is higher, and the range of the ratio (D/B) may preferably approximately be higher than 13.9 and lower than 15.0.

A pole portion 212a may extend from an end of each tooth portion 212 at the side of the center thereof to have predetermined intervals from neighboring tooth portions 212. The interval A between the pole portions 212a (or the interval between the tooth portions) should not be narrower than a diameter d of the coil 240 for facilitation of a winding work of the coil 240. The interval A between the pole portions 212a may greatly affect the efficiency of the motor, and accordingly depend on the material of the coil 240, the diameter d of the coil 240 and the number of slots of the stator 210. For example, when the diameter of the coil is 0.5 mm, the interval A between the pole portions may preferably be less than about 1.73 mm for a 20-slot stator, about 2.10 mm for a 24-slot stator, and about 2.00 mm for a 28-slot stator.

The core may be provided with slot portions 213 each recessed in a cutting manner to define a space for insertion of the coil 240 therein and disposed at about a uniform interval. The slot portions 213 may be formed long in a radial direction upon a planar projection. Both side surfaces thereof may more extend from a central side toward an outer side, and an outer surface thereof may be curved outwardly.

The slot portion 213, as shown in FIGS. 3 and 4, may include a plurality of main slot portions 213a on which a main coil is wounded, and a plurality of sub slot portions 213b on which a sub coil is wound. The main slot portions 213a and the sub slot portions 213b may be alternately formed in a circumferential direction with predetermined intervals. For example, as shown in FIG. 4, the plurality of main slot portions 213a may be formed in the circumferential direction, and the plurality of sub slot portions 213b may then be formed by a 90-degree phase difference. Afterwards, the plurality of main slot portions 213a may be formed again by a 90-degree phase difference, and in turn the plurality of sub slot portions 213n may be formed by a 90-degree phase difference.

A cross section of the main slot portions 213a may be greater than a cross section of the sub slot portions 213b. The cross sections of the main slot portions 213a and the sub slot portions 213b may be appropriately decided according to the number of turns of the coil in consideration of productivity of the motor. That is, for the main slot portion 213a, a ratio (S1/N) of the cross section S1 of the main slot 213a to the number of turns N may be in the range of 2.18 to 2.22. Also, for the sub slot portion 213b, the ratio N/S2 may be in the range of 1.85 to 1.89. Here, the cross section of the main slot portion 213a and the cross section of the sub slot portion 213b may be equally applied to a case where a copper coil is wound on the main slot portion 213a and an aluminum coil is wound on the sub slot portion 213b as well as a case where an aluminum coil is wound on both the main slot portion 213a and the sub slot portion 213b.

The main slot portions 213a and the sub slot portions 213b may be formed to be the same as or different from each other in view of an individual cross section, an entire cross section and the number. These may be designed in consideration of an efficiency against the price of the coil wound on the motor. For example, when the coil 240 is the aluminum coil, the individual cross section or entire cross section and the number of the main slot portions 213a and the sub slot portion 213b may be increased as compared to those of the copper coil, but a relative ratio thereof may not be greatly different from the shape of a slot portion of a general motor. However, when the aluminum coil is wound on the main slot portions 213a and the copper coil is wound on the sub slot portions 213b, a diameter of the aluminum coil is increased more than a diameter of the copper coil, accordingly, the individual cross section or entire cross section and the number of the main slot portions 213a may be relatively increased as compared to the sub slot portions 213b. On the contrary, when the copper coil is wound on the main slot portions 213a and the aluminum coil is wound on the sub slot portions 213b, the individual cross section or entire cross section and the number of the sub slot portions 213b may be relatively increased as compared to the main slot portions 213a.

The coil 240 wound on the stator 210 may be implemented by the aluminum (exhibiting 62.7% of conductivity) whose conductivity is not greatly lower than that of the copper (exhibiting 99.9% of conductivity), although it is actually lower than the conductivity of the copper, and especially, price of the aluminum is much cheaper than the copper.

The aluminum coil exhibits the lower conductivity than the copper coil and accordingly may lower the efficiency of the motor 200 for the compressor. Thus, to compensate for this, the diameter of the aluminum coil may preferably be approximately 25% thicker than that of the copper coil.

The aluminum coil has rigidity lower than the copper in view of its material characteristic. Hence, in order to maintain the rigidity of the coil, it may be preferable to prevent a thickness of an enamel layer coated as an insulation layer on an outer circumferential surface of the aluminum coil from being thinner than a thickness of at least an enamel layer coated on an outer circumferential surface of the copper coil.

The rigidity of the aluminum coil, which is lower than the copper in view of its material characteristic, may deteriorate a damping effect. Accordingly, noise may increase specifically at a low frequency band, but it can be addressed by optimizing an inner diameter D of the stator 210 and an area S of the slot portion 213, or optimizing the inner diameter D of the stator 210 and a height of a lower end coil 244.

The motor for the compressor may operate in response to power applied from the exterior. To this end, as shown in FIG. 5, terminals 260 which are electrically connected to an external power source may be provided. The terminals 260 may have a one-to-one coupling with respective coils (for example, a single-phase motor has two main coils and one sub coil), and tied up by a bundle of wires typically known as a harness 270, thereby being connected to the external power source.

As a method for connecting the terminals and the coils by one by one, serrations are provided at each terminal and protrude into the insulation layer of the coil to be connected to a conductor. However, when the conductor is made of aluminum having a low tensile strength, the coil may be cut off. In consideration of this, an intermediate wire connecting method is used in which the terminals are coupled to lead wires, respectively, and ends of the lead wires are connected to the coil.

Examples of the intermediate wire connecting method may include welding, soldering and the like. The welding method is able to reduce a cost by virtue of direct welding without peeling the insulation layer. However, it requires many components for welding, exhibits low working efficiency, causes deviations according to an operator s skill, and is unable to be automated. Especially, the coil may be melted due to welding heat. The soldering method may have a disadvantage in view of an addition of a peeling process as compared to the welding method. Especially, upon applying the aluminum coil, a defect may be caused due to the lack of affinity. Therefore, the present disclosure proposes a method for reducing a cut-off detect even with employing an aluminum coil having a low tensile strength when directly connecting terminals each having serrations to the coil in a clamping manner.

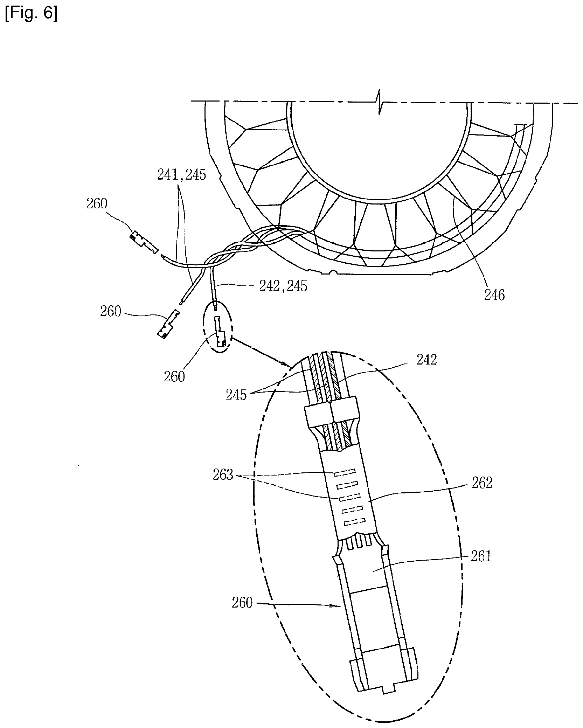

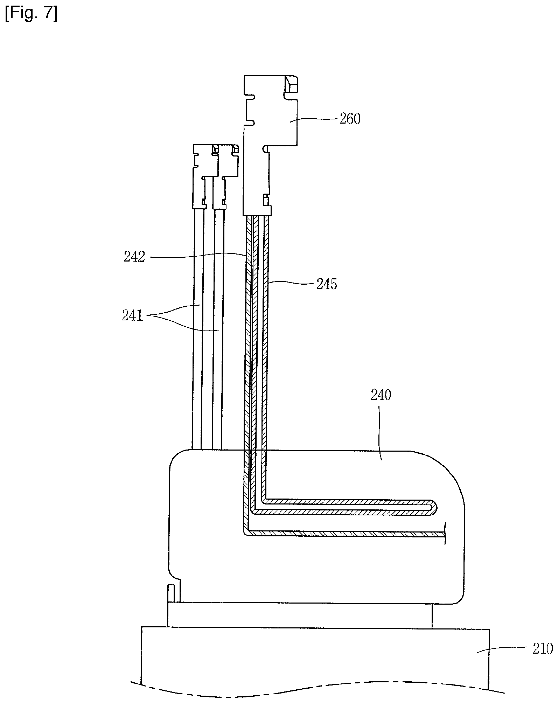

To this end, according to this exemplary embodiment, as shown in FIG. 6, for a single-phase motor having two main coils 241 made of copper and one sub coil lead 242 made of aluminum, a reinforcing wire 245 having a predetermined tensile strength (approximately similar to the copper coil) may be pressed onto the serrations 263 together with the aluminum sub coil lead 242 prior to, as shown in FIG. 7, connecting the terminal 260 to the sub coil lead 242, thereby preventing in advance the sub coil lead 242 from being cut off.

The reinforcing wire 245 may be formed by coating an insulation layer such as enamel on a conductor, which is made of a material having a higher tensile strength than the aluminum. When the conductor is exposed as both ends of the reinforcing wire 245 is cut off, in order to prevent a current from being applied via the exposed conductor, a middle portion of the reinforcing wire 245 may be folded and the folded portion may be wound on the sub coil lead 242 or fixed onto an end coil by a coil fixing thread 246. On the other hand, the both ends where the conductor is exposed may be pressed by a fixing piece 262 together with an end portion of the sub coil lead 242 at a body part 261 of each terminal 260, thereby being fixedly pressed onto the serrations 263. Alternatively, an insulation processing may be performed for the both cut-off ends by coating the insulation layer thereon so as to prevent external power from being supplied to the reinforcing wire.

As such, upon use of the aluminum coil having a low tensile strength as the winding coil of the motor for the compressor, when terminals having serrations are connected to the aluminum coil, a reinforcing wire having a relatively high tensile strength may be pressed onto the serrations together with the aluminum coil, which may result in preventing in advance the aluminum coil from being cut off due to a pressing force and accordingly preventing a cut-off defect of the motor for the compressor having the aluminum coil, thereby improving reliability and simultaneously reducing a fabricating cost of the motor.

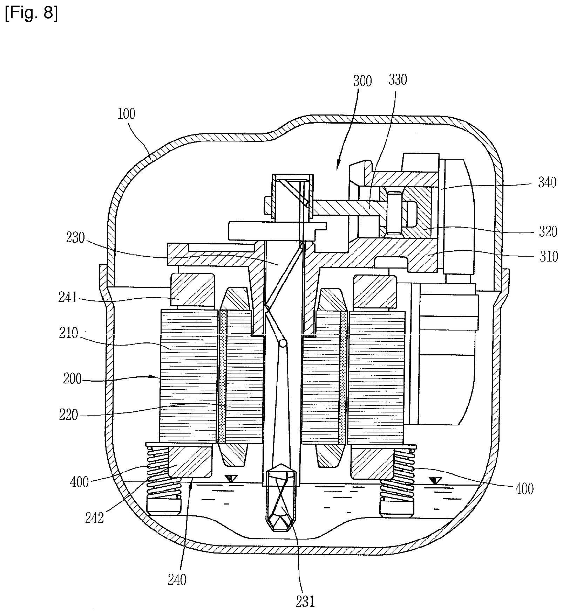

Hereinafter, description will be given of a reciprocal compressor having a reciprocal motor according to this specification, with reference to FIG. 8.

That is, a reciprocal compressor according to this specification may include a hermetic container 100, a driving motor 200 as a driving source installed within the hermetic container 100, a compression unit 300, in which a piston 320 is connected to a rotational shaft 230 of the driving motor 200 via a connecting rod 330 and linearly reciprocates within a compression space of a cylinder block 310 having a valve assembly 340 so as to compress a refrigerant, and a support unit 400 located between a bottom surface of the hermetic container 100 and a lower surface of the driving motor 200 to elastically support the driving motor 200 and the compression unit 300.

The driving motor 300 may be implemented as the aforementioned motor for the compressor, namely, an induction motor, in which the aluminum coil is inserted into both the main slot portions 213a and the sub slot portions 213b of the stator 210 to be wound on the tooth portions 212, or the copper coil is inserted in the main slot portions 213a and the aluminum coil is inserted into the sub slot portions 213b so as to be wound on each of the tooth portions 212. The structure of the stator 210 of the driving motor 200 is the same as the aforementioned in the reciprocal motor, so detailed description thereof will be omitted.

Here, as the diameter of the aluminum coil is greater than the typical copper coil in order to maintain the efficiency of the motor, a weight of the stator 210 of the driving motor 200 may increase. Additionally, as heights of an upper end coil 243 and a lower end coil 244 of the stator 210 increase, it is necessary to make an installation position of the compression unit 300 high and make the height of the hermetic container 100 high in consideration of interference with the compression unit 300. Also, as the weight of the stator 210 increases, it is required to increase an elastic force of the support unit 400 in a longitudinal direction. To this end, a height of a compression coil spring implementing the support unit 400 may be lowered, but in this case, it should be considered that an oil feeder 231 installed at a lower end of the rotational shaft 230 of the driving motor 200 be not bumped against the hermetic container 100. Considering that the weight of the stator 210 and the height of the compression unit 300 increase, a weight of an eccentric mass installed at the rotor 220 or the rotational shaft 230 should be appropriately adjusted, in order to prevent friction and thusly-caused noise between the stator 210 and the rotor 220 of the driving motor 200.

With the configuration of the reciprocal compressor, when power is supplied to the driving motor 200, the rotational shaft 230 rotates and the rotational force is converted into a linear reciprocating motion of the compression unit 300 by the connecting rotor 330. The compression unit 300 sucks and compresses a refrigerant via a valve assembly 340 and discharges the compressed refrigerant into a refrigerating system, while the piston 320 linearly reciprocates within the compression space of the cylinder block 310. The series of operations are repeated.

Here, when alternating current (AC) power is applied from the outside to the main coil and the sub coil wound on the stator 210 of the driving motor 200, a force of preferentially rotating the sub coil, whose polar axis goes 90 ahead as compared with that of the main coil, is applied in response to formation of a rotating magnetic field by the current. Also, since a current phase of the sub coil 242 is prior to a current phase of the main coil 241 by the capacitor which is connected to the sub coil 242 in series, the sub coil 242 performs a high-speed rotation. With the high-speed rotation of the driving motor 200, the rotating force is converted into a linear motion via the connecting rod 330 to be transferred to the piston 320.

As the driving motor having the aluminum coil is employed, a fabricating cost of the driving motor can be reduced that much, accordingly, a production cost of the reciprocal compressor can be remarkably reduced without great change in the efficiency thereof, as compared with the copper coil wound. The efficiency of the reciprocal compressor as compared with the price of the compressor can be enhanced by virtue of an appropriate design of the individual cross section, the entire cross section or the number of the main slot portions and the sub slot portions.

When the main coil or the sub coil of the winding coil of the driving motor is formed of aluminum with a low tensile strength and the winding coil is pressed onto terminals having serrations for connection, the reinforcing wires with a relatively great tensile strength, such as copper, can be pressed onto the terminals together with the aluminum, thereby preventing in advance the aluminum coil from being cut off, resulting in enhancement of assembly reliability of the reciprocal compressor.

## Claims

1. A motor for a compressor comprising:
a stator (210);
a winding coil (240) wound on the stator, the winding coil (240) formed by coating an insulation layer made of an insulating material on an outer circumferential surface of a conductor (250) having at least a part made of aluminum; and
terminals (260) each pressed onto the winding coil lead (242) such that at least a part of the terminals penetrates into the insulating layer and is connected to the conductor (250),
**characterized in that**
the motor further comprises a reinforcing wire (245) pressed with a part of the winding coil lead (242) by the terminal (260), and
wherein the reinforcing wire (245) is made of a material having a higher tensile strength than the winding coil lead (242).

2. The motor of claim 1, wherein the reinforcing wire (245) is made by coating an insulating material on an outer circumferential surface of a conductor (250) having a higher tensile strength than the aluminum.

3. The motor of claim 2, wherein the reinforcing wire (245) has a folded end formed by folding a middle portion of the reinforcing wire, a middle portion of the reinforcing wire (245) is coated, wherein the folded end is fixed onto the winding coil (240) and both ends of the reinforcing wire (245) are connected to the terminal (260).

4. The motor of claim 2, wherein at least one end of both ends of the reinforcing wire is fixed onto the winding coil (240), and the other end thereof is connected to the terminal.

5. The motor of any one of claims 1 to 4, wherein the stator comprises:
a yoke portion (211) formed in an annular shape to define a magnetic path;
a plurality of tooth portions (212) each protruding from an inner circumferential surface of the yoke portion toward the center by a predetermined length; and
a plurality of slot portions (213) recessed between the neighboring tooth portions in a circumferential direction by predetermined cross sections,
wherein the plurality of slot portions (213) comprise main slot portions (213a) having a main coil wound thereon, and sub slot portions (213b) having a sub coil wound thereon, the several number of main slot portions (213a) and the several number of sub slot portions (213b) being aligned in an alternate manner.

6. The motor of claim 5, wherein the main slot portion (213a) is wound by a coil made of a material having a higher conductivity than aluminum.

7. The motor of claim 5 or 6, wherein the sub slot portion (213b) is wound by a coil, the coil formed by coating an insulating layer on a conductor made of aluminum.

8. The motor of any one of claims 5 to 7, wherein the reinforcing wire (245) is formed by coating an insulating material on an outer circumferential surface of a conductor (250) having a higher tensile strength than the aluminum, and
wherein the reinforcing wire (245) has a folded end formed by folding a middle portion of the reinforcing wire, a middle portion of the reinforcing wire is coated, wherein the folded end is fixed onto the winding coil (240) and both ends of the reinforcing wire are pressed onto the terminal for connection.

9. The motor of any one of claims 5 to 7, wherein the reinforcing wire is formed by coating an insulating material on an outer circumferential surface of a conductor (250) having a higher tensile strength than the aluminum, and
wherein at least one of both ends of the reinforcing wire (245) is fixed onto the winding coil (240), the at least one end of the reinforcing wire (245) being insulated, and the other end thereof is pressed onto the terminal (260) for connection.

10. A reciprocal compressor comprising:
a hermetic container (100);
a driving motor (200) installed within the hermetic container (100) to generate a rotational force;
a cylinder block (310) installed within the hermetic container (100) to form a compression space;
a piston (320) coupled to the driving motor (200) to compress a refrigerant while reciprocating within the compression space of the cylinder block (310); and
a valve assembly (340) coupled to the cylinder block (310) to restrict suction and discharge of the refrigerant,
wherein the driving motor (200) is according to one of claims 1 to 9.

## Patentansprüche

1. Motor für einen Verdichter mit:
einem Stator (210);
einer um den Stator gewickelten Spulenwicklung (240), wobei die Spulenwicklung (240) durch Auftragen einer Isolierungsschicht aus Isoliermaterial auf eine äußere Umfangsfläche eines Leiters (250), von dem mindestens ein Teil aus Aluminium besteht, gebildet ist; und
Anschlüssen (260), die jeweils auf den Spulenwicklungsdraht (242) gedrückt sind, so dass sich mindestens ein Teil der Anschlüsse in die Isolierschicht erstreckt und mit dem Leiter (250) verbunden ist,
**dadurch gekennzeichnet, dass**
der Motor ferner einen Verstärkungsdraht (245) aufweist, der mit einem Teil des Spulenwicklungsdrahts (242) von dem Anschluss (260) gedrückt wird, und
wobei der Verstärkungsdraht (245) aus einem Material besteht, das eine höhere Zugfestigkeit als der Spulenwicklungsdraht (242) hat.

2. Motor nach Anspruch 1, wobei der Verstärkungsdraht (245) durch Auftragen eines Isoliermaterials auf eine äußere Umfangsfläche eines Leiters (250) gebildet ist, der eine höhere Zugfestigkeit als das Aluminium hat.

3. Motor nach Anspruch 2, wobei der Verstärkungsdraht (245) ein gefaltetes Ende hat, das durch Falten eines Mittelabschnitts des Verstärkungsdrahts gebildet ist, wobei ein Mittelabschnitt des Verstärkungsdrahts (245) beschichtet ist, wobei das gefaltete Ende an der Spulenwicklung (240) befestigt ist und beide Enden des Verstärkungsdrahts (245) mit dem Anschluss (260) verbunden sind.

4. Motor nach Anspruch 2, wobei mindestens ein Ende der beiden Enden des Verstärkungsdrahts an der Spulenwicklung (240) befestigt ist und das andere Ende mit dem Anschluss verbunden ist.

5. Motor nach einem der Ansprüche 1 bis 4, wobei der Stator aufweist:
einen Jochabschnitt (211), der ringförmig ausgebildet ist, um einen magnetischen Pfad zu definieren;
eine Vielzahl von Zahnabschnitten (212), die jeweils von einer Innenumfangsfläche des Jochabschnitts in Richtung des Mittelpunkts um eine vorgegebene Länge vorstehen; und
eine Vielzahl von Schlitzabschnitten (213), die zwischen den benachbarten Zahnabschnitten in Umfangsrichtung durch vorgegebene Querschnitte ausgespart sind,
wobei die Vielzahl von Schlitzabschnitten (213) Hauptschlitzabschnitte (213a), auf die eine Hauptspule gewickelt ist, und Nebenschlitzabschnitte (213b) aufweisen, auf die eine Nebenspule gewickelt ist, wobei die mehreren Hauptschlitzabschnitte (213a) und die mehreren Nebenschlitzabschnitte (213b) abwechselnd ausgerichtet sind.

6. Motor nach Anspruch 5, wobei der Hauptschlitzabschnitt (213a) von einer Spule umwickelt ist, die aus einem Material mit höherer Leitfähigkeit als Aluminium besteht.

7. Motor nach Anspruch 5 oder 6, wobei der Nebenschlitzabschnitt (213b) von einer Spule umwickelt ist, die durch Auftragen einer Isolierschicht auf einen aus Aluminium bestehenden Leiter gebildet ist.

8. Motor nach einem der Ansprüche 5 bis 7, wobei der Verstärkungsdraht (245) durch Auftragen eines Isoliermaterials auf eine Außenumfangsfläche eines Leiters (250) gebildet ist, der eine höhere Zugfestigkeit als Aluminium hat, und
wobei der Verstärkungsdraht (245) ein gefaltetes Ende hat, das durch Falten eines Mittelabschnitts des Verstärkungsdrahts gebildet ist, wobei ein Mittelabschnitt des Verstärkungsdrahts beschichtet ist, wobei das gefaltete Ende an der Spulenwicklung (240) befestigt ist und beide Enden des Verstärkungsdrahts zum Zwecke der Verbindung auf den Anschluss gedrückt sind.

9. Motor nach einem der Ansprüche 5 bis 7, wobei der Verstärkungsdraht durch Auftragen eines Isoliermaterials auf eine Außenumfangsfläche eines Leiters (250) gebildet ist, der eine höhere Zugfestigkeit als Aluminium hat, und
wobei mindestens ein Ende der beiden Enden des Verstärkungsdrahts (245) an der Spulenwicklung (240) befestigt ist, wobei das mindestens eine Ende des Verstärkungsdrahts (245) isoliert ist und das andere Ende zum Zwecke der Verbindung auf den Anschluss (260) gedrückt ist.

10. Hubkolbenverdichter mit:
einem hermetischen Behälter (100);
einem Antriebsmotor (200), der im hermetischen Behälter (100) angeordnet ist, um eine Rotationskraft zu erzeugen;
einem Zylinderblock (310), der im hermetischen Behälter (100) angeordnet ist, um einen Verdichtungsraum zu bilden;
einem Kolben (320), der mit dem Antriebsmotor (200) gekoppelt ist, um ein Kühlmittel zu komprimieren, während er sich im Verdichtungsraum des Zylinderblocks (310) hin und herbewegt; und
eine Ventilanordnung (340), die mit dem Zylinderblock (310) gekoppelt ist, um das Ansaugen und das Abgeben des Kühlmittels zu beschränken,
wobei der Antriebsmotor (200) gemäß einem der Ansprüche 1 bis 9 ist.

## Revendications

1. Moteur pour compresseur, comprenant :
un stator (210) ;
-une bobine (240) enroulée sur le stator, ladite bobine (240) étant formée par revêtement d'une couche isolante en matériau isolant sur une surface circonférentielle extérieure d'un conducteur (250) comprenant au moins une partie en aluminium ; et
des bornes (260) serrées chacune contre le fil de bobine (242) de sortie qu'au moins une partie des bornes pénètre dans la couche isolante et contacte le conducteur (250),
**caractérisé en ce que**
ledit moteur comprend en outre un fil de renforcement (245) serré par la borne (260) avec une partie du the fil de bobine (242), et
**en ce que** le fil de renforcement (245) est fait d'un matériau présentant une résistance à la traction supérieure à celle du fil de bobine (242).

2. Moteur selon la revendication 1, où le fil de renforcement (245) est obtenu par revêtement d'un matériau isolant sur une surface circonférentielle extérieure d'un conducteur (250) présentant une résistance à la traction supérieure à celle de l'aluminium.

3. Moteur selon la revendication 2, où le fil de renforcement (245) a une extrémité pliée formée par pliage d'une partie centrale du fil de renforcement, où une partie centrale du fil de renforcement (245) est revêtue, où l'extrémité pliée est fixée sur la bobine (240) et où les deux extrémités du fil de renforcement (245) sont connectées à la borne (260).

4. Moteur selon la revendication 2, où au moins une des deux extrémités du fil de renforcement est fixée sur la bobine (240), et où son autre extrémité est connectée à la borne.

5. Moteur selon l'une des revendications 1 à 4, où le stator comprend :
une culasse (211) de forme annulaire définissant un chemin magnétique ;
une pluralité de dents (212) faisant chacun saillie vers le centre sur une longueur définie depuis une surface circonférentielle intérieure de la culasse ; et
une pluralité de fentes (213) ménagées entre les dents contiguës dans la direction circonférentielle avec des sections transversales définies,
où la pluralité de fentes (213) comprend des fentes principales (213a) pourvues d'une bobine principale enroulée sur elles, et des fentes secondaires (213b) pourvues d'une bobine secondaire enroulée sur elles, la pluralité de fentes principales (213a) et la pluralité de fentes secondaires (213b) étant alignées de manière alternée.

6. Moteur selon la revendication 5, où une bobine en matériau de conductivité supérieure à celle de l'aluminium est enroulée sur la fente principale (213a).

7. Moteur selon la revendication 5 ou la revendication 6, où une bobine formée par revêtement d'une couche isolante sur un conducteur en aluminium est enroulée sur la fente secondaire (213b).

8. Moteur selon l'une des revendications 5 à 7, où le fil de renforcement (245) est formé par revêtement d'un matériau isolant sur une surface circonférentielle extérieure d'un conducteur (250) dont la résistance à la traction est supérieure à celle de l'aluminium, et où le fil de renforcement (245) a une extrémité pliée formée par pliage d'une partie centrale du fil de renforcement, où une partie centrale du fil de renforcement est revêtue, où l'extrémité pliée est fixée sur la bobine (240) et où les deux extrémités du fil de renforcement sont serrées contre la borne pour être connectées.

9. Moteur selon l'une des revendications 5 à 7, où le fil de renforcement est formé par revêtement d'un matériau isolant sur une surface circonférentielle extérieure d'un conducteur (250) dont la résistance à la traction est supérieure à celle de l'aluminium, et
où au moins une des deux extrémités du fil de renforcement (245) est fixée sur la bobine (240), ladite au moins une extrémité du fil de renforcement (245) étant isolée et l'autre extrémité étant serrée sur la borne (260) pour être connectée.

10. Compresseur réciproque, comprenant :
un carter hermétique (100) ;
un moteur d'entraînement (200) monté à l'intérieur du carter hermétique (100) pour générer une force de rotation ;
un bloc-cylindre (310) monté à l'intérieur du carter hermétique (100) pour former un espace de compression ;
un piston (320) relié au moteur d'entraînement (200) pour comprimer un fluide réfrigérant par va-et-vient à l'intérieur de l'espace de compression du bloc-cylindre (310) ; et une unité de soupape (340) reliée au bloc-cylindre (310) pour limiter l'aspiration et évacuer le fluide réfrigérant,
où le moteur d'entraînement (200) est le moteur selon l'une des revendications 1 à 9.
